# EUROPÄISCHE PATENTSCHRIFT

(11) **EP 2 849 923 B1**
(45) Veröffentlichungstag und Bekanntmachung des Hinweises auf die Patenterteilung: **05.10.2016**
(21) Anmeldenummer: 13723032.2
(22) Anmeldetag: 29.04.2013
(51) Int. Cl.: B29B 9/04, B29B 13/10, B01J 2/22, B29C 47/08, B29C 47/36, B01J 2/26, B29C 43/22

(54) **VERFAHREN ZUR HERSTELLUNG VON PULVER AUS EINEM KÖRNIGEREN, THERMOPLASTISCHEN MATERIAL UND VORRICHTUNG ZUR HERSTELLUNG VON CHIPS AUS EINEM PULVERFÖRMIGEN, THERMOPLASTISCHEN MATERIAL**
METHOD FOR PRODUCING POWDER FROM A GRANULAR THERMOPLASTIC MATERIAL AND DEVICE FOR PRODUCING CHIPS FROM A PULVERULENT THERMOPLASTIC MATERIAL
PROCÉDÉ DE FABRICATION D'UNE POUDRE À PARTIR D'UN MATÉRIAU THERMOPLASTIQUE GRANULEUX ET DISPOSITIF DE FABRICATION DE PUCES À PARTIR D'UN MATÉRIAU THERMOPLASTIQUE PULVÉRULENT

(30) Priorität: 15.05.2012 CH 685122012
(43) Veröffentlichungstag der Anmeldung: 25.03.2015
(73) Patentinhaber: BBA Innova AG, 5000 Aarau (CH)
(72) Erfinder: KIRCHHOFER, Urs, CH-6204 Sempach (CH)
(74) Vertreter: Rentsch Partner AG
(86) Internationale Anmeldenummer: PCT/EP2013/058913
(87) Internationale Veröffentlichungsnummer: WO 2013/171061

(56) Entgegenhaltungen:
- EP-A2- 0 485 037
- DE-A1- 3 601 135
- GB-A- 1 115 026
- US-A- 4 934 928
- US-B1- 6 355 194

## Beschreibung

### TECHNISCHES GEBIET

Die vorliegende Erfindung betrifft das Gebiet der Herstellung von Pulver aus einem körnigen, thermoplastischen Material, wobei in einer eine Homogenisierung bewirkenden ersten Vorrichtung aus einer inhomogenen Vormischung des Materials eine erste Schmelze hergestellt wird, wobei aus der ersten Schmelze in einer zweiten Vorrichtung erste Chips hergestellt werden, wobei die ersten Chips zu einem Pulver vermahlen werden, wobei dieses Pulver in wenigstens zwei Fraktionen mit gröberen und feineren Korngrössen separiert wird, und wobei eine ausgewählte Fraktion mit feineren Korngrössen in das Verfahren vor dem Vermahlen zurückgeführt wird. Bei dem Pulver kann es sich beispielsweise um solches für Pulverbeschichtungen oder Toner für Laserdrucker oder Kopierer handeln. Die Chips werden häufig auch als Flakes bezeichnet. Bei der Fraktion mit den feineren Korngrössen handelt es sich insbesondere um auch mit Fines bezeichnetes, staubförmiges Material.

Die Erfindung betrifft weiter eine Vorrichtung zur Herstellung von Chips aus einem pulverförmigen, thermoplastischen Material, welche bei dem vorgenannten Verfahren einsetzbar ist.

### STAND DER TECHNIK

Ein Verfahren der eingangs genannten Art gemäß dem Oberbegriff des Anspruchs 1 ist beispielsweise aus US 6 355 194 B1 bekannt. Bei Verfahren dieser Art wird, je nach den für das Pulver gewünschten Eigenschaften, in einem ersten Schritt eine Vormischung aus verschiedenen Komponenten bereitgestellt. Die Komponenten werden dabei in unterschiedlicher Form zugeführt, insbesondere als Granulat, in Form von Chips und/oder auch bereits als mehr oder weniger feines Pulver. Die Komponenten brauchen auch nicht alle thermoplastisch zu sein. Im Falle von Toner enthält die Vormischung beispielsweise neben einem eigentlich thermoplastischen Bindemittel in Granulatform zu einem erheblichen Anteil Graphit oder Farbpigmente als Zuschlagsstoff in Pulverform. Im Rahmen der vorliegenden Erfindung wird jedoch auch eine solche Vormischung als ein thermoplastisches Material aufgefasst, solange sie sich hinsichtlich Schmelzbarkeit und Wiedererstarren insgesamt im Wesentlichen thermoplastisch verhält.

Bei ihrer Bereitstellung ist die Vormischung mehr oder weniger inhomogen. Zur Homogenisierung wird sie in einem Extruder als erste Vorrichtung aufgeschmolzen, wobei die durch die Schnecke des Extruders ausgeübten Scherkräfte die Homogenisierung bewirken. Nichtschmelzende Zuschlagsstoffe werden dabei dispergiert. Die aus dem Extruder austretende, heisse Schmelze wird in einer kontinuierlichen Kühlanlage als zweite Vorrichtung abgekühlt und durch einen Brecher der Kühlanlage in Chips zerbrochen. Die Grösse dieser Chips wird üblicherweise so gewählt, dass sie pneumatisch gut transportierbar sind.

Die Chips werden daraufhin zu einer Mühle befördert, in welcher sie zu einem feineren Pulver vermahlen werden. Das Pulver besitzt unvermeidbar eine gewisse Korngrössenverteilung in der Regel nach Art einer Gauss'schen Normalverteilung, wobei sich durch Wahl des Mahlverfahrens und der verwendeten Mühle die Lage des Maximums sowie die Breite dieser Verteilung verändern und hinsichtlich der gewünschten Anwendung des Pulvers optimieren lässt. Für gewisse Anwendungen, wie im Falle von Toner, sind jedoch auch dann nicht alle Korngrössen verwendbar, so dass die Korngrössenverteilung durch zusätzliche Massnahmen noch unterteilt oder wenigstens eine Fraktion mit sehr feinen Korngrössen (die sogenannten Fines) abgetrennt werden muss. Hierzu kommen Zyklonabscheider und/oder Filter zum Einsatz.

Die abgetrennte/n Fraktion/en bilden in der Regel einen Produktionsausschuss. Im Falle von Toner kann der Anteil dieses Ausschusses bis zu 25% betragen. Von daher macht es Sinn macht, ihn zu rezyklieren und in den Herstellungsprozess wieder einzuführen. Gemacht wird dies bereits durch Beimischen des Ausschusses zu der Vormischung, die dem Extruder zugeführt wird. Im Extruder wird er mit dem neu eingesetzten Material gemeinsam aufgeschmolzen und homogenisiert.

Diese Art der Rezyklierung hat jedoch den Nachteil, dass die Netto-Durchsatzleistung des Extruders durch zwei Einflüsse stark gemindert wird, nämlich durch den Anteil des bereits vorher extrudierten Materials und durch die in dem feinkörnigen Material enthaltene Luft. Je feiner das Pulver, desto mehr Luft ist in ihm enthalten und desto ausgeprägter ist der Effekt.

Aus DE 36 01 135 A1 ist eine Vorrichtung zur Herstellung von Chips aus einem pulverförmigen, thermoplastischen Material gemäß dem Oberbegriff des Anspruchs 5 bekannt, mit einer Kühlwalze, einem Brecher, einem ersten umlaufenden Band, einem zweiten umlaufenden Band und einer Zuführung für das Material in Pulverform auf eines der beiden Bänder, wobei beide Bänder mit dem Material dazwischen auf der Kühlwalze und bis zum Brecher aufeinander ablaufen.

### DARSTELLUNG DER ERFINDUNG

Es ist eine Aufgabe der Erfindung, ein Verfahren der eingangs genannten Art anzugeben, welches den erwähnten Nachteil der Verminderung des Netto-Durchsatzleistung des Extruders vermeidet. Gelöst wird diese Aufgabe erfindungsgemäss durch das Verfahren gemäss Anspruch 1, welches demnach dadurch gekennzeichnet ist, dass in einer eine Homogenisierung nicht bewirkenden dritten Vorrichtung aus der ausgewählten Fraktion eine zweite Schmelze und aus dieser zweite Chips hergestellt werden, und dass die zweiten Chips mit den ersten Chips zusammengebracht und gemeinsam mit diesen vermahlen werden.

Die Erfindung macht sich den Umstand zunutze, dass die zur Rückführung ausgewählte Fraktion in sich bereits homogen ist. Es genügt insofern, aus dieser Fraktion ohne erneute Homogenisierung und ohne erneuten Durchlauf durch den Extruder Chips herzustellen, die einfach mit den aus dem neu eingesetzten, den Extruder durchlaufenden Material hergestellten Chips zusammengebracht und gemeinsam mit diesen vermahlen werden können. Zur Herstellung der Chips aus der zur Rückführung ausgewählten Fraktion braucht es insbesondere auch keinen zweiten Extruder. Eine vorstehend als dritte bezeichnete Vorrichtung ohne Homogenisierungswirkung reicht aus. Eine solche Vorrichtung, wie sie nachfolgend noch beschrieben wird und welche ebenfalls Gegenstand der vorliegenden Erfindung ist, kann sowohl in der Anschaffung als auch hinsichtlich ihres Energieverbrauchs günstiger als ein Extruder sein.

Die Rückführung der ausgewählten Fraktion kann batchweise oder kontinuierlich erfolgen. Zumindest im letzteren Falle ist es bevorzugt, die ausgewählte Fraktion nach ihrer Separierung auf kurzem Weg in die dritte Vorrichtung zu überführen, wobei dieser Weg in der Regel wesentlich kürzer bemessen werden kann als die Distanz zur ersten Vorrichtung, d.h. zum Extruder. Insbesondere wenn die pulverführenden Teile explosionsgeschützt ausgeführt und mit Abstand von den übrigen Teilen und ggf. sogar in separaten Räumen aufgestellt sind, kann die Distanz zum Extruder recht gross sein. Die in der dritten Vorrichtung herstellten Chips können dagegen sicher und problemlos über grössere Distanzen beispielsweise pneumatisch transportiert werden.

Eine weitere Aufgabe der Erfindung besteht darin, eine Vorrichtung zur Herstellung von Chips aus einem thermoplastischen Material in Pulverform anzugeben, die als dritte Vorrichtung in dem erfindungsgemässen Verfahren einsetzbar ist und welche in der Anschaffung kosten- sowie hinsichtlich ihres Energieverbrauchs günstiger ist als ein Extruder. Diese Aufgabe wird erfindungsgemäss gelöst durch eine Vorrichtung gemäss Anspruch 5. Diese Vorrichtung ist demnach, wie die aus DE 36 135 A1 bekannte, versehen mit einer Kühlwalze, einem Brecher, einem ersten umlaufenden Band, einem zweiten umlaufenden Band und einer Zuführung für pulverförmiges, thermoplastisches Material auf eines der beiden Bänder, wobei beide Bänder mit dem Material dazwischen auf der Kühlwalze und bis zum Brecher aufeinander ablaufen. Die Vorrichtung ist dadurch gekennzeichnet, dass sie zusätzlich eine Heizwalze umfasst und dass beide Bänder mit dem Material dazwischen auf der Heizwalze, der Kühlwalze und bis zum Brecher aufeinander ablaufen.

Auch hinsichtlich der erfindungsgemässen Vorrichtung macht sich die Erfindung den Umstand zunutze, dass die bei dem erfindungsgemässen Verfahren zur Rückführung ausgewählte Fraktion in sich bereits homogen ist und keiner Homogenisierung bedarf. Ein Aufschmelzen ohne Umwälzung mit Scherwirkung genügt. Insofern ist kein teurer Extruder erforderlich. Die Erfindung sieht als Mittel zum Aufschmelzen lediglich eine Heizwalze vor. Der zum Aufschmelzen des pulverförmigen Materials mit der Heizwalze erforderliche Energiebedarf ist geringer als der Energiebedarf für einen Extruder. Im Falle von Toner genügt es beispielsweise, das Material mit der Heizwalze auf eine Temperatur zwischen 70° - 120° C zu erhitzen, wohingegen in Extrudern typisch 150° - 200° C erforderlich sind. Die mit der Kühlwalze abzuführende Wärmemenge ist entsprechend geringer. Durch die beiden Bänder wird das aufgeschmolzene Material auch auf kürzestem Wege der Kühlwalze zugeführt und wieder verfestigt.

Die dem Material mit der Heizwalze zugeführte und von ihm mit der Kühlwalze abführte Wärme muss jeweils durch das Band hindurch, das mit diesen Walzen in Kontakt ist. Von daher ist es günstig, wenn mit beiden Walzen jeweils dasselbe der beiden Bänder in Kontakt ist und wenn dieses Band gut wärmeleitend ist. Das andere Band braucht dann nicht so gut wärmeleitend zu sein. Es hat in diesem Fall auf beiden Walzen die Aufgabe das Material auf den Walzen unter gewisser Druckausübung zu halten. Dazu muss es unter Spannung stehen und kann dahingehend optimiert sein.

Damit das pulverförmige Material auf eines der beiden Bänder zugeführt werden kann, muss dieses Band über eine gewisse Strecke getrennt von dem anderen Band geführt sein. Vorzugsweise wird mit der Zuführung ein Pulverteppich auf einem der beiden Bänder erzeugt, welcher möglichst eine gleichmässige und definierte Dicke aufweisen sollte. Sobald das andere Band wieder dazukommt, gerät das noch pulverförmige Material unter Druck zwischen den Bändern. In ihm enthaltene Luft wird herausgepresst und tritt im Gegenstrom aus dem Spalt zwischen den beiden zusammenlaufenden Bändern aus. Das Material verliert dadurch auch an Volumen, wodurch sich der Abstand zwischen den beiden Bändern verringert. Das Entfernen der Luft wirkt sich günstig auf das Aufschmelzen und das nachfolgende Wiederverfestigen des Materials aus, da Luft ein schlechter Wärmeleiter ist und Eindringen der Wärme in das Material auf der Heizwalze und die Abfuhr der Wärme aus dem Material auf der Kühlwalze behindern und verzögern würde.

Um das Herauspressen der Luft aus dem Spalt zwischen den beiden Bändern möglichst effektiv zu machen, ist es bevorzugt, das andere Band um eine Einzugswalze auf der Heizwalze heranzuführen, so dass die Weite des Spaltes durch den gegenseitigen Abstand dieser Umlenkrolle und der Heizwalze festgelegt ist. Weiter bevorzugt kann dieser Abstand noch einstellbar vorgesehen sein. Damit kann die Weite des Spalts den jeweiligen Verhältnissen wie der Dicke des Pulverteppichs, der Feinheit des pulverförmigen Materials und/oder der in diesem enthaltenen Luftmenge angepasst werden.

Zur Erzielung einer effizienten Wärmeübertragung bzw. einer guten Ausnutzung der Heiz- und der Kühlwalze sollten die beiden Bänder mit dem thermoplastischen Material dazwischen die Heizwalze und die Kühlwalze jeweils um mehr als 180° umschlingen. Das kann einfach erreicht werden, indem die beiden Bänder zwischen den beiden Walzen um eine Umlenkwalze geführt sind.

Es genügt, wenn nur eine Walze, vorzugsweise die Kühlwalze, angetrieben ist und die übrigen Walzen, die Bänder sowie Umlenkrollen für die Bänder von der einen angetriebenen Walze mitbewegt werden.

Die Einzugswalze und/oder die Umlenkwalze können zusätzlich geheizt werden. Das Heizen der ersten Umlenkrolle unterstützt das Einziehen des pulverförmigen Materials zwischen die beiden Bänder, dass Heizen der zweiten Umlenkrolle und das Aufschmelzen des Materials. Die Umlenkwalze kann alternativ zur Unterstützung der Kühlwalze auch gekühlt werden.

Weiter ist es bevorzugt, wenn die Heizwalze und die Kühlwalze nur einseitig gelagert sind, wie dies bei dem aus WO 2001/1047491 A1 bekannten Walzenkühler der Fall ist. Die gesamte Vorrichtung sowie insbesondere ihre mit dem thermoplastischen Material in Berührung kommenden Teile sind dann von der anderen Seite aus gut zugänglich, können ggf. einfach ausgebaut und einfach gereinigt werden. Der aus WO 2001/1047491 A1 bekannte Walzenkühler ist auch im Rahmen des erfindungsgemässen Verfahrens als zweite Vorrichtung mit Vorteil einsetzbar.

Schliesslich kann an der Heizwalze noch wenigstens eine Heizbacke vorgesehen sein, mit welchem das Material zwischen den beiden Bändern von aussen zusätzlich mit Strahlungswärme erwärmt werden kann.

### KURZE ERLÄUTERUNG ZU DEN FIGUREN

Die Erfindung soll nachfolgend anhand von Ausführungsbeispielen im Zusammenhang mit der Zeichnung näher erläutert werden. Es zeigen:
- Fig. 1: ein Schema einer Anlage zur Herstellung von Pulver nach dem erfindungsgemässen Verfahren;
- Fig. 2: schematisch eine erfindungsgemässe Vorrichtung zur Herstellung von Chips aus einem thermoplastischen Material in Pulverform; und
- Fig. 3: eine perspektivische Ansicht derselben Vorrichtung.

### WEGE ZUR AUSFÜHRUNG DER ERFINDUNG

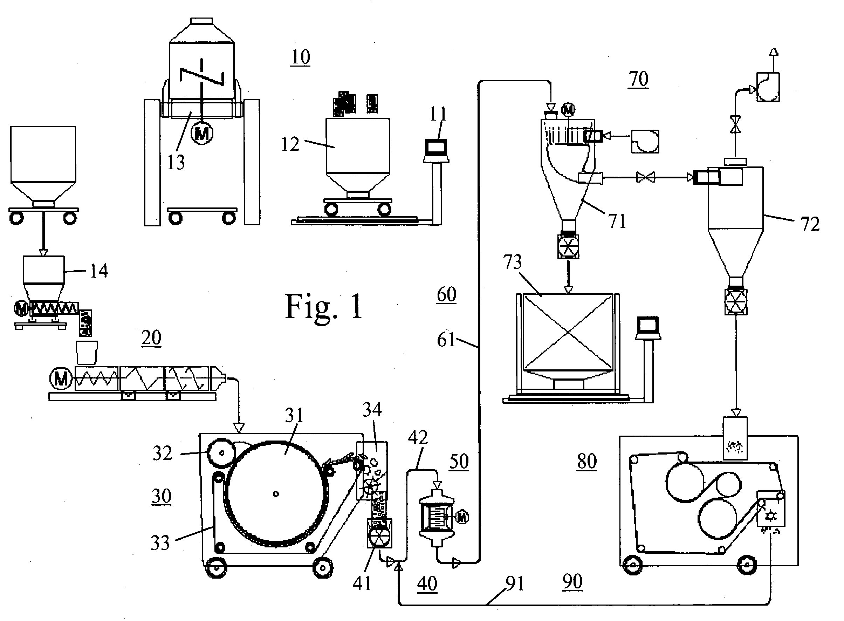

Die Anlage von Fig. 1 weist in der Abfolge des damit ausgeführten erfindungsgemässen Verfahrens eine Vormischeinheit 10, einen Extruder 20, einen kontinuierlichen Kühler in Form eines Walzenkühlers 30, erste Transportmittel 40, eine Mühle 50, zweite Transportmittel 60, eine Trenneinheit 70, eine erfindungsgemässe Vorrichtung 80 zur Herstellung von Chips aus einem thermoplastischen Material in Pulverform sowie dritte Transportmittel 90 auf.

Die Vormischeinheit 10 umfasst eine Waage 11, einen Behälter 12, einen Mischer 13 und eine Dosiervorrichtung 14. Auf der Waage 11 wird zu verarbeitendes, körniges Material in den Behälter 12 eingefüllt und eingewogen. In der Regel werden hier verschiedene Materialen mit unterschiedlichen Korngrössen zusammengeführt. Wenigstens eines dieser Materialien sollte thermoplastisch sein. Mit dem Mischer 13 wird das in dem Behälter 12 enthaltene Material gemischt. Die so erhaltene Vormischung wird aus dem Behälter 12 über die Dosiervorrichtung 14 dem Extruder 20 zugeführt.

Im Extruder 20 wird das Material aufgeschmolzen. Durch die durch die Extruderschnecken in dem aufgeschmolzenen Material ausgeübten starken Scherkräfte wird es homogenisiert. Nichtschmelzende Anteile werden dispergiert.

Der aus dem Extruder 20 austretende, heisse, plastische bzw. pasteuse Strang fliesst direkt in den unterhalb des Extrudes angeordneten Walzenkühler 30. Dieser umfasst eine Kühlwalze 31, eine Quetschwalze 32, ein Anpressband 33 und einen Brecher 34. Der plastische Strang wird zunächst zwischen der Kühlwalze 31 und der Quetschwalze 32 zu einer dünnen, sich annähernd über die gesamte Breite der Walzen erstreckenden Folie ausgerollt. Diese Folie läuft entlang eines Teilumfangs der Kühlwalze 1, wobei sie von dem Anpressband 33 in Anlage an der Kühlwalze 31 gehalten wird. Die Kühlwalze 31 ist gekühlt, indem sie von einem Kühlmittel durchströmt wird. Die Kühlwalze 31 ist dadurch in der Lage, Wärme von der Folie aufzunehmen und abzuführen. Unter dieser Abkühlung beginnt die Folie zu erstarren. Mit dem Anpressband 33 wird die zumindest teilweise bereits erstarrte Folie dem Brecher 34 zugeführt, durch welchen sie in einzelne Stücke, sogenannte Chips , zerbrochen wird.

Die durch den Brecher 34 erzeugten Chips fallen nach unten in eine Austragsschleuse 41 der ersten Transportmittel 40, von wo sie über eine Leitung 42 pneumatisch, d.h. in einem Luftstrom, zur Mühle 50 gelangen, in welcher sie zu einem Pulver vermahlen werden.

Das von der Mühle 50 erzeugte Pulver wird über die zweiten Transportmittel 60 mit einer Leitung 61, wiederum pneumatisch, zur Trenneinheit 70 gefördert. In der Trenneinheit 70 wird das Pulver in zwei Fraktionen mit unterschiedlichen Korngrössen bzw. Korngrössenverteilungen separiert. Dazu dienen zwei in Serie betriebene Zyklonabscheider 71 und 72, die wiederum über pneumatische Leitungen miteinander verbunden sind.

Der erste Zyklonabscheider 71 trennt eine erste, grobkörnigste Fraktion des Pulvers ab, welche nach unten in den Behälter 73 ausgetragen wird. Im Falle von Toner entspricht diese Fraktion dem gewünschten Produkt, da Toner keine sehr feinen Anteile aufweisen darf. Die abgetrennten Korngrössen sind bei Toner typisch grösser als 10 Mikrometer.

Im zweiten Zyklonabscheider 72 wird eine Faktion mit feineren Korngrössen abgetrennt, Der Austrag dieser Fraktion erfolgt in die erfindungsgemässe Vorrichtung 80, in welcher sie, wie nachstehend noch beschrieben, in wieder verwertbare Chips umgearbeitet wird.

Nach dem zweiten Zyklonabscheider 72 ist nur noch sehr kleiner Anteil des Pulvers mit Korngrössen kleiner als 1 Mikrometer im Luftstrom enthalten, der ggf. über Filter (nicht dargestellt) noch aus dem Luftstrom eliminiert werden kann, bevor dieser in die Umgebung entlassen wird. Unter Umständen könnte dieser Anteil mit einem dritten Zyklonabscheider (ebenfalls nicht dargestellt) auch noch abgeschieden und gegebenenfalls einer Wiederverwertung zugeführt werden.

Im Falle von Toner beträgt der Anteil der direkt verwertbaren gröbsten Fraktion typisch 75 - 90 Gewichts-%. Der Anteil der feineren Fraktion beträgt typisch 10 - 25 Gewichts-%. Von dieser Aufteilung her, die für andere Produkte ähnlich ist, kann es sich lohnen, die Fraktion mit den feineren Korngrössen zu rezyklieren.

Bei der Anlage von Fig. 1 wird die Fraktion mit den feineren Korngrössen deshalb, wie bereits erwähnt, der Vorrichtung 80 zugeführt, um daraus Chips herzustellen, die in das Verfahren wieder eingeführt werden. Zum Transport der Chips von der Vorrichtung 80 dienen die dritten Transportmittel 90 mit einer pneumatischen Leitung 91, die vor der Mühle 40 in die Leitung 42 der ersten Transportmittel 40 mündet.

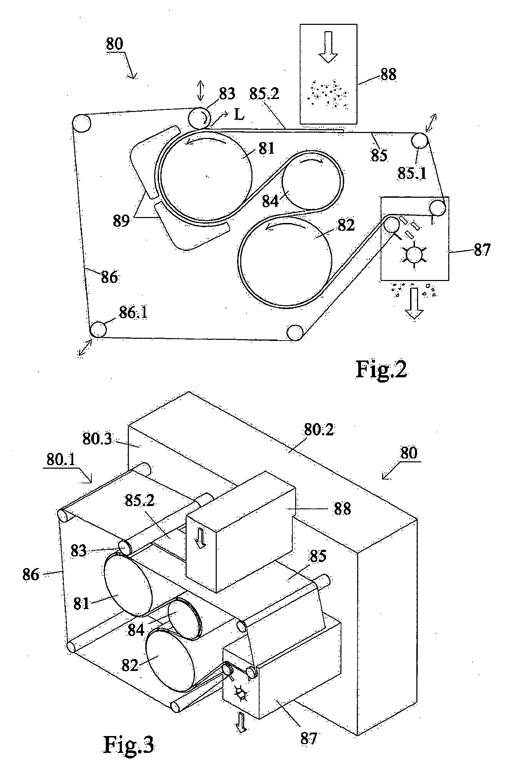

Nachfolgend wird eine Ausführungsform der Vorrichtung 80 anhand der Figuren 2 und 3 beschrieben.

Bei dieser Ausführungsform umfasst die Vorrichtung 80, wie in der schematischen Darstellung von Fig. 2 am besten zu erkennen ist, eine Heizwalze 81, eine Kühlwalze 82, eine Einzugswalze 83, eine Umlenkwalze 84, ein umlaufendes Unterband 85, ein umlaufendes Oberband 86, einen Brecher 87 und eine Zuführung 88 für das zu verarbeitende pulverförmige Material. Die beiden Bänder 85 und 86 laufen auf der Heizwalze 81, der zweiten Umlenkrolle 84 und der Kühlwalze 82 sowie bis hin zum Brecher 87 aufeinander ab, wobei das Unterband 85 mit der Heizwalze 81 und der Kühlwalze 81 in direktem Kontakt ist. Mit der Umlenkwalze 84 ist das Oberband 86 in Kontakt. Durch die Umlenkung um die Umlenkwalze 84 umschlingen die beiden Bänder 85, 86 die Heizwalze 81 und die Kühlwalze 82 um jeweils mehr als 180°.

Zwischen dem Brecher 87 und der Heizwalze 81 sind die beiden Bänder 85, 86 über mehrere Rollen getrennt voneinander geführt, wobei die Rollen 85.1 und 86.1 in den durch die Pfeile in Fig. 2 angegeben Richtungen verstellbar sind. Damit können die Bänder 85, 86 unter Spannung gesetzt werden.

Vor der Heizwalze 81 verläuft das Unterband 85 horizontal unter der Zuführung 88 durch, mit welcher das pulverförmige Material in Form eines gleichmässig dünnen Teppichs auf das Unterband 85 aufgestreut wird. Die Dicke des Teppichs beträgt bei Toner mit Korngrössen zwischen 1 und 5 Mikrometer beispielsweise 8 - 12 mm.

Über die Einzugswalze 83 wird sodann das Oberband 86 an das Unterband 85 herangeführt und zwar auf der Heizwalze 81 kurz nachdem das Unterband 85 die Heizwalze 81 erreicht. In den sich ergebenden Spalt läuft das pulverförmige Material hinein. Eingebettet zwischen den Bändern 85, 86 läuft es sodann über die Heizwalze 81, wo es unter dem Anpressdruck des Oberbandes 86 aufgeschmolzen wird und über die Kühlwalze 82, wo es zu einer Art Folie wieder verfestigt wird, bis zum Brecher 87, in welchen es stückweise hineinfällt. Um Letzteres zu ermöglichen ist das Oberband 86 eingangs des Brechers 87 vom Unterband 85 nach unten weggeführt, wohingegen das Unterband 85 den Brecher 87 im Wesentlichen noch horizontal durchläuft. Der Brecher 87 zerkleinert das verfestigte Material zu Chips mit der gewünschten Grösse. Diese beträgt beispielsweise 5 - 10 mm entsprechend der Grösse der vom Walzenkühler 30 erzeugten Chips.

Die Weite des genannten Spaltes zwischen dem Unterband 85 und dem Oberband 86 wird bestimmt durch den gegenseitigen Abstand der Heizwalze 81 und der ersten Umlenkrolle 83, vermindert um die Dicken beider Bänder 85, 86. Die Weite dieses Spaltes ist durch eine Verstellbarkeit der Einzugswalze 83 einstellbar.

Durch die Spannung des Oberbandes 86 gerät das pulverförmige Material auf der Heizwalze 81 unter Druck und wird komprimiert, wodurch in dem pulverförmigen Material enthaltene Luft herausgepresst wird. Die Luft verlässt den Spalt im Gegenstrom, was in Fig. 2 durch den mit L bezeichneten Pfeil angedeutet ist. Durch geeignete Einstellung der Weite des Spaltes und der Spannung des Oberbandes 85 kann der Einzug des pulverförmigen Materials in den Spalt, das Entweichen der Luft aus dem Spalt und die Kompression des pulverförmigen Materials im Spalt optimiert werden. Durch Beheizung der ersten Umlenkrolle 83 kann der Einzug des pulverförmigen Materials in den Spalt gegebenenfalls noch weiter verbessert werden.

Das Unterband 85, durch welches hindurch die Wärme auf der Heizwalze 81 zugeführt und auf der Kühlwalze abgeführt wird, ist besser wärmeleitend als das Oberband 86, das hinsichtlich des von ihm vor allem auszuübenden Drucks optimiert ist.

Die Umlenkwalze 84 ist kühlbar oder alternativ heizbar. So kann sie entweder zur Unterstützung der Heizwalze 81 oder der Kühlwalze 82 eingesetzt werden.

Zum Heizen oder Kühlen wird ein mehr oder weniger heisses bzw. kaltes Fluid durch die Walzen und/oder Rollen geleitet.

Von den Teilen 81 - 86 ist nur die Kühlwalze 82 angetrieben. Die anderen Teile werden von der Kühlwalze mitbewegt.

Mit 89 sind in Fig. 2 noch zwei Heizbacken 89 bezeichnet zum Einbringen von Wärme in das aufzuschmelzende Material zwischen den Bändern 85, 86 auf der Heizwalze 81 auch von aussen, sofern dies erforderlich sein sollte. Die Heizbacken 89 sind mit dem auf der Heizwalze äusseren Oberband 86 nicht in Berührung, so dass die Wärme nur als Strahlungswärme übertragen wird.

Fig. 3 zeigt die Vorrichtung 80 in perspektivischer Darstellung, wodurch erkennbar ist, dass vorbeschriebenen Teile 81- 89 in einem Prozessraum 80.1 angeordnet und einseitig an einer Trennwand 80.3 gegenüber einem Maschinenraum 80.2 montiert bzw. gelagert sind. Diese Teile werden auch jeweils nur einseitig, soweit erforderlich, vom Maschinenraum 80.2 aus angetrieben und mit Heiz- oder Kühlflüssigkeit versorgt. Sie sind daher von der in Fig. 3 vorderen Seite her gut zugänglich und können ggf. einfach ausgebaut und jedenfalls einfach und effektiv gereinigt werden. Die im Maschinenraum 80.2 angeordneten Antriebe, Lager- und Versorgungseinheiten sind andererseits hinter der Trennwand 80.3 geschützt angeordnet und kommen mit dem pulverförmigen bzw. nach dem Aufschmelzen pasteusen Material nicht in Berührung.

Bei der Vorrichtung 80 können die beiden Bänder 85, 86 eine Breite von 60 - 100 cm aufweisen. Als Bänder eignen sich Glasfaserbänder oder Keflargewebebänder mit Teflonbeschichtung mit einer Dicke von 0.25 - 0.40 mm. Für die Heizwalze 81 und die Kühlwalze 82 sind Durchmesser von 40 - 100 cm geeignet. Die Einzugswalze 83 kann einen Durchmesser von 10 - 30 cm und die Umlenkwalze 84 einen Durchmesser von 20 - 50 cm haben. Der Spalt zwischen der Heizwalze 81 und der Einzugswalze 83 könnte zwischen 4 - 30 mm verstellbar sein.

Bei geeigneter, anderer Führung der beiden Bänder 85, 86 könnte das pulverförmige Material auch auf das Oberband 86 aufgebracht werden. Der Verlauf der Bänder und die räumliche Anordnung der Walzen wäre in diesem Fall aber weniger günstig.

Das beschriebene Verfahren gemäss Fig. 1 ist kontinuierlich. Es könnte jedoch auch in Einzelschritten mit entsprechender Zwischenspeicherung der Zwischenprodukte wie insbesondere der im Walzenkühler 30 und der erfindungsgemässen Vorrichtung 80 erzeugten Chips ausgeführt werden. Anstelle eines Walzenkühlers könnte auch eine andere, kontinuierliche Kühlanlage wie beispielsweise ein Bandkühler eingesetzt werden.

### BEZEICHNUNGSLISTE

- Vormischeinheit: 10
- Waage: 11
- Behälter: 12
- Mischer: 13
- Dosiervorrichtung: 14
- Extruder: 20
- Walzenkühler: 30
- Kühlwalze: 31
- Quetschwalze: 32
- Anpressband: 33
- Brecher: 34
- erste Transportmittel: 40
- Austragsschleuse: 41
- pneumatische Leitung: 42
- Mühle: 50
- zweite Transportmittel: 60
- pneumatische Leitung: 61
- Trenneinheit: 70
- Zyklonabscheider: 71 und 72
- Behälter: 73
- erfindungsgemässe Vorrichtung: 80
- Prozessraum: 80.1
- Maschinenraum: 80.2
- Trennwand: 80.3
- Heizwalze: 81
- Kühlwalze: 82
- Einzugswalze: 83
- Umlenkwalze: 84
- Unterband: 85
- Spann-Rolle: 85.1
- Teppich: 85.2
- Oberband: 86
- Spann-Rolle: 86.1
- Brecher: 87
- Zuführung: 88
- Heizbacken: 89
- dritte Transportmittel: 90
- pneumatische Leitung: 91
- Luft: L

## Patentansprüche

1. Verfahren zur Herstellung von Pulver aus einem grobkörnigeren, thermoplastischen Material,
wobei in einer eine Homogenisierung bewirkenden ersten Vorrichtung (20) aus einer inhomogenen Vormischung des Materials eine erste Schmelze hergestellt wird, wobei aus der ersten Schmelze in einer zweiten Vorrichtung (30) erste Chips hergestellt werden,
wobei die ersten Chips zu einem Pulver vermahlen werden,
wobei dieses Pulver in wenigstens zwei Fraktionen mit gröberen und feineren Korngrössen separiert wird, und
wobei eine ausgewählte Fraktion mit feineren Korngrössen in das Verfahren vor dem Vermahlen zurückgeführt wird,
**dadurch gekennzeichnet,**
**dass** in einer eine Homogenisierung nicht bewirkenden dritten Vorrichtung (80) aus der ausgewählten Fraktion eine zweite Schmelze und aus dieser zweite Chips hergestellt werden, und
**dass** die zweiten Chips mit den ersten Chips zusammengebracht und gemeinsam mit diesen vermahlen werden.

2. Verfahren nach Anspruch 1 oder 2, **dadurch gekennzeichnet, dass** die ausgewählte Fraktion nach ihrer Separierung auf kurzem Weg in die dritte Vorrichtung überführt wird, wobei dieser Weg kürzer ist als die Distanz zur ersten Vorrichtung.

3. Verfahren nach einem der Ansprüche 1 oder 2, **dadurch gekennzeichnet, dass** als

4. Verfahren nach einem der Ansprüche 1 - 3, **dadurch gekennzeichnet, dass** als zweite Vorrichtung ein Walzenkühler als kontinuierliche Kühlanlage (30) verwendet wird.

5. Vorrichtung (80) zur Herstellung von Chips aus einem pulverförmigen, thermoplastischen Material wie der ausgewählten Fraktion des Verfahrens nach den Ansprüchen 1 - 4,
mit
einer Kühlwalze (82),
einem Brecher (87),
einem ersten umlaufenden Band (85),
einem zweiten umlaufenden Band (86) und
einer Zuführung (88) für das Material in Pulverform auf eines der beiden Bänder (85,86),
wobei beide Bänder (85, 86) mit dem Material dazwischen auf der Kühlwalze (82) und bis zum Brecher (87) aufeinander ablaufen,
**dadurch gekennzeichnet,**
**dass** sie zusätzlich eine Heizwalze (81) umfasst und dass beide Bänder (85, 86) mit dem Material dazwischen auf der Heizwalze (81), der Kühlwalze (82) und bis zum Brecher (87) aufeinander ablaufen.

6. Vorrichtung nach Anspruch 5, **dadurch gekennzeichnet, dass** das Material in Pulverform durch die Zuführung (88) in Form eines Teppichs 85.2 mit gleichmässiger Dicke auf eines der beiden Bänder (85, 86) aufgebracht wird.

7. Vorrichtung nach einem der Ansprüche 5 oder 6, **dadurch gekennzeichnet, dass** eines (85) der beiden Bänder (85, 86) in Kontakt sowohl mit der Heizwalze (81) als auch mit der Kühlwalze (82) ist.

8. Vorrichtung nach Anspruch 7, **dadurch gekennzeichnet, dass** das eine (85) der beiden Bänder (85, 86) besser wärmeleitend ist als das andere (86) der beiden Bänder (85, 86).

9. Vorrichtung nach einem der Ansprüche 7 oder 8, **dadurch gekennzeichnet, dass** das andere (86) der beiden Bänder (85, 86) unter Spannung steht und unter der Wirkung dieser Spannung auf der Heizwalze (81) und der Kühlwalze (82) Druck auf das Material ausübt.

10. Vorrichtung nach einem der Ansprüche 5 - 9, **dadurch gekennzeichnet, dass** das andere (86) der beiden Bänder (85, 86) über eine Einzugswalze (83) auf der Heizwalze (81) an das eine (85) der beiden Bänder (85, 86) herangeführt ist, wobei der Abstand zwischen der Einzugswalze (83) und der Heizwalze (81) einstellbar ist.

11. Vorrichtung nach einem der Ansprüche 5 - 10, **dadurch gekennzeichnet, dass** die beiden Bänder (85, 86) mit dem Material dazwischen die Heizwalze (81) und die Kühlwalze (82) jeweils um mehr als 180° umschlingen, indem sie zwischen diesen beiden Walzen (81, 82) um eine Umlenkwalze (84) geführt sind, mit welcher das andere (86) der beiden Bänder in Kontakt ist.

12. Vorrichtung nach einem der Ansprüche 10 oder 11, **dadurch gekennzeichnet, dass** die Einzugswalze (83) und/oder die Umlenkwalze (84) heizbar sind und/oder dass die Umlenkwalze (84) kühlbar ist.

13. Vorrichtung nach einem der Ansprüche 5 - 12, **dadurch gekennzeichnet, dass** nur eine der Walzen (82), angetrieben ist und die andere/n Walze/n (81, 83, 84) sowie die Bänder (85, 86) von dieser einen Walze (82) mitbewegt werden.

14. Vorrichtung nach einem der Ansprüche 5 - 13, **dadurch gekennzeichnet, dass** die Walzen (81 - 84) nur einseitig gelagert sind.

15. Vorrichtung nach einem der Ansprüche 5 - 14, **dadurch gekennzeichnet, dass** an der Heizwalze (81) wenigstens ein Heizbacken (89) vorhanden ist, mit welchem das Material zwischen den beiden Bändern (85, 86) von aussen zusätzlich mit Strahlungswärme erwärmt werden kann.

## Claims

1. A method for producing powder from a coarsely granular, thermoplastic material,
wherein a homogenizing first device (20) produces a first melt from a non-homogeneous pre-mixture of the material,
wherein first chips are produced from the first melt in a second device (30),
wherein the chips are milled to a powder,
wherein this powder is separated into at least two fractions with coarser and finer particle sizes, and
wherein a selected fraction with finer particle sizes is returned to the method prior to milling,
**characterized in that**
a second melt is produced from the selected fraction in a non-homogenizing third device (80), with second chips being produced from the latter, and
that the second chips are combined with the first chips and milled with each other.

2. The method according to claim 1 or 2, **characterized in that** the selected fraction, once separated, is relayed to the third device over a short path, wherein this path is shorter than the distance to the first device.

3. The method according to one of claims 1 or 2, **characterized in that** an extruder (20) is used as the first device.

4. The method according to one of claims 1 to 3, **characterized in that** a rolling cooler as a continuous cooling system (30) is used as the second device.

5. A device (80) for producing chips from a powdery, thermoplastic material, such as the selected fraction of the method according to claims 1 to 4,
with
a cooling roller (82),
a crusher (87),
a first circulating belt (85),
a second circulating belt (86), and
a feeder (88) for the material in powder form onto one of the two belts (85, 86),
wherein both belts (85, 86) run one above the other with the material in between over the cooling roller (82), and up to the crusher (82),
**characterized in that**,
it additionally comprises a heating roller (81) and that the two belts (85, 86) run one above the other with the material in between over the heating roller (81), the cooling roller (82), and up to the crusher (87).

6. The device according to claim 5, **characterized in that** the material is applied in powder form through the feeder (88) as a carpet (85.2) with a uniform thickness onto one of the two belts (85, 86).

7. The device according to one of claims 5 or 6, **characterized in that** one (85) of the two belts (85, 86) is in contact with both the heating roller (81) and cooling roller (82).

8. The device according to claim 7, **characterized in that** the one (85) of the two belts (85, 86) conducts heat more readily than the other (86) of the two belts (85, 86).

9. The device according to one of claims 7 or 8, **characterized in that** the other (86) of the two belts (85, 86) is stressed, and exerts a pressure on the material as this stress acts on the heating roller (81) and cooling roller (82).

10. The device according to one of claims 5 to 9, **characterized in that** the other (86) of the two belts (85, 86) is moved toward the one (85) of the two belts (85, 86) via a draw-in roller (83) on the heating roller (81), wherein the distance between the draw-in roller (83) and heating roller (81) can be adjusted.

11. The device according to one of claims 5 to 10, **characterized in that** the two belts (85, 86) with the material in between them are slung around the heating roller (81) and cooling roller (82) by more than a respective 180 °, **in that** they are guided between these two rollers (81, 82) around a deflection roller (84) with which the other (86) of the two belts is in contact.

12. The device according to one of claims 10 or 11, **characterized in that** the draw-in roller (83) and/or the deflection roller (84) can be heated and/or that the deflection roller (84) can be cooled.

13. The device according to one of claims 5 to 12, **characterized in that** only one of the rollers (82) is driven, and the other roller(s) (81, 83, 84) along with the belts (85, 86) are moved by this one roller (82).

14. The device according to one of claims 5 to 13, **characterized in that** the rollers (81 - 84) are only unilaterally mounted.

15. The device according to one of claims 5 to 14, **characterized in that** the heating roller (81) is provided with at least one heater bar (89), with which the material between the two belts (85, 86) can be additionally heated from outside with radiant heat.

## Revendications

1. Procédé pour la fabrication de poudre à partir d'un matériau thermoplastique à grains gros,
dans lequel, dans un premier dispositif (20) produisant une homogénéisation, une première masse fondue est fabriquée à partir d'un mélange de base non homogène du matériau, dans lequel, dans un deuxième dispositif (30), on fabrique des premières puces à partir de la première masse fondue,
dans lequel les premières puces sont broyées pour donner une poudre,
dans lequel cette poudre est séparée en au moins deux fractions avec des grosseurs de grain plus grossières et plus fines, et
dans lequel une fraction choisie avec des grosseurs de grain plus fines est ramenée dans le procédé avant le broyage,
**caractérisé en ce que**
dans un troisième dispositif (80) ne produisant pas une homogénéisation, on produit une deuxième masse fondue à partir de la fraction choisie, et à partir de cette masse, des deuxièmes puces étant fabriquées, et les deuxièmes puces étant réunies avec les premières puces et étant broyées ensemble avec celles-ci.

2. Procédé selon la revendication 1 ou 2, **caractérisé en ce que**, après sa séparation, la fraction choisie est transférée sur un court trajet vers un troisième dispositif, ce trajet étant plus court que la distance par rapport au premier dispositif.

3. Procédé selon l'une des revendications 1 ou 2, **caractérisé en ce que** l'on utilise une extrudeuse (20) en tant que premier dispositif.

4. Procédé selon l'une des revendications 1-3, **caractérisé en ce que**, en guise de deuxième dispositif, on utilise un refroidisseur à rouleau en tant qu'installation de refroidissement (30) en continu.

5. Dispositif (80) pour la fabrication de puces à partir d'un matériau thermoplastique pulvérulent tel la fraction choisie du procédé selon l'une des revendications 1-4,
avec
un rouleau de refroidissement (82),
un broyeur (87),
une première bande rotative (85),
une deuxième bande rotative (86) et
une amenée (88) pour le matériau sous forme de poudre sur l'une des deux bandes (85, 86),
dans lequel les deux bandes (85, 86) avec le matériau entre elles se déroulent l'une sur l'autre sur le rouleau de refroidissement (82) et jusqu'au broyeur (87),
**caractérisé en ce que**
il comprend de manière additionnelle un rouleau chauffant (81) et **en ce que** les deux bandes (85, 86) avec le matériau entre elles se déroulent l'une sur l'autre sur le rouleau chauffant (81), le rouleau de refroidissement (82) et jusqu'au broyeur (87).

6. Dispositif selon la revendication 5, **caractérisé en ce que** le matériau est appliqué sous forme de poudre par l'amenée (88) sous la forme d'un tapis 85.2 avec une épaisseur régulière sur l'une des deux bandes (85, 86).

7. Dispositif selon l'une des revendications 5 ou 6, **caractérisé en ce que** l'une (85) des deux bandes (85, 86) est en contact avec le rouleau chauffant (81) tout comme également avec le rouleau de refroidissement (82).

8. Dispositif selon la revendication 7, **caractérisé en ce que** l'une (85) des deux bandes (85, 86) a une meilleure conduction thermique que l'autre (86) des deux bandes (85, 86).

9. Dispositif selon l'une des revendications 7 ou 8, **caractérisé en ce que** l'autre (86) des deux bandes (85, 86) est sous tension et exerce une pression sur le matériau sous l'effet de cette tension sur le rouleau chauffant (81) et le rouleau de refroidissement (82).

10. Dispositif selon l'une des revendications 5-9, **caractérisé en ce que** l'autre (86) des deux bandes (85, 86) est rapprochée de cette bande (85) des deux bandes (85, 86) via un rouleau d'alimentation (83) sur le rouleau chauffant (81), dans lequel la distance entre le rouleau d'alimentation (83) et le rouleau chauffant (1) peut être réglée.

11. Dispositif selon l'une des revendications 5-10, **caractérisé en ce que** les deux bandes (85, 86) avec le matériau entre elles entourent respectivement de plus de 180° le rouleau chauffant (81) et le rouleau de refroidissement (82) **en ce qu'**elles sont guidées entre ces deux rouleaux (81, 82) autour d'un rouleau de renvoi (84) avec lequel l'autre (86) des deux bandes est en contact.

12. Dispositif selon l'une des revendications 10 ou 11, **caractérisé en ce que** le rouleau d'alimentation (83) et/ou le rouleau de renvoi (84) peuvent être chauffés et/ou **en ce que** le rouleau de renvoi (84) peut être refroidi.

13. Dispositif selon l'une des revendications 5-12, **caractérisé en ce que** seulement l'un des rouleaux (82) est entraîné et **en ce que** l'autre ou les autres rouleau(x) (81, 83, 84) ainsi que les bandes (85, 86) sont déplacés en commun avec ce rouleau (82).

14. Dispositif selon l'une des revendications 5-13, **caractérisé en ce que** les rouleaux (81-84) sont montés seulement d'un côté.

15. Dispositif selon l'une des revendications 5-14, **caractérisé en ce qu'**il y a au moins une mâchoire chauffante (89) sur le rouleau chauffant (81) avec laquelle le matériau entre les deux bandes (85, 86) peut être chauffé de manière additionnelle depuis l'extérieur avec une chaleur par rayonnement.
